# EUROPEAN PATENT APPLICATION

(11) **EP 1 727 017 A1**
(43) Date of publication of application: **29.11.2006**
(21) Application number: 05011268.9
(22) Date of filing: 24.05.2005
(51) Int. Cl.: G06F 1/16, H04M 1/57

(54) **Information input/output device of mobile apparatus**

(71) Applicant: Primax Electronics Ltd, 114 Neihu, Taipei (TW)
(72) Inventor: Hsi, Cheng-Ning, Taipei (TW)
(74) Representative: Paustian, Othmar

(57) **Abstract**

An information input/output device of a mobile apparatus includes a first input device, a second input device, a recording device, a first output device, a second output device and a control device. The first input device is used for receiving an information in a first multimedia type from a user. The second input device is used for receiving the information in a second multimedia type. The recording device stores therein the information in the first multimedia type and the information in the second multimedia type. The first output device is used for outputting the information in the first multimedia type. The second output device is used for outputting the information in the second multimedia type. The control device is used for controlling the first input device, the second input device, the recording device, the first output device and the second output device.

## Description

### FIELD OF THE INVENTION

The present invention relates to an information input/output device of a mobile apparatus, and more particularly to an information input/output device capable of recording the same information in at least two multimedia types.

### BACKGROUND OF THE INVENTION

In modem society, mobile apparatuses such as mobile phones or personal digital assists (PDAs) become essential communication devices because they are portable and convenient.

As known, some sensory organs of the user fail to function well in some circumstances. For example, the mobile apparatus is not applicable in the circumstance where the sense of sight, hearing or touch is hindered.

For example, in the case of driving while using the mobile phone, the user should simultaneously look at the mobile phone and dial the phone number of the receiver. In such manner, the likelihood of the traffic accident is increased because only one hand is available for driving, and the user should be distracted from his driving work to input/search the phone number and then depress the dial key. In addition, in a case that the user participates in a meeting, the senses of sight and hearing are occupied, but the sense of touch is still available. In this circumstance, the mobile phone should be switched from a ring-tone notification mode into a vibration notification mode. Unfortunately, according to the vibration of the mobile phone, it is difficult to realize who the caller is. Furthermore, if the user is intended to send an urgent electronic mail in the meeting, using the PDA to key in and reply the electronic mail is thought to be inappropriate when the meeting is still on going.

### SUMMARY OF THE INVENTION

It is an object of the present invention to provide an information input/output device of a mobile apparatus and a method for inputting/outputting a multimedia information, in which an information in at least two multimedia types are inputted therein, and the same information is recorded and outputted therevia, thereby acquiring the information from the mobile apparatus when some sensory organs are occupied

In accordance with a first aspect of the present invention, there is provided an information input/output device of a mobile apparatus. The information input/output device comprises a first input device, a second input device, a recording device, a first output device, a second output device and a control device. The first input device is used for receiving an information in a first multimedia type from a user. The second input device is used for receiving the information in a second multimedia type. The recording device stores therein the information in the first multimedia type and the information in the second multimedia type. The first output device is used for outputting the information in the first multimedia type. The second output device is used for outputting the information in the second multimedia type. The control device is used for controlling the first input device, the second input device, the recording device, the first output device and the second output device.

Preferably, the information input/output device further comprises a third input device and a third output device. The third input device is used for receiving the information in a third multimedia type. The third output device is used for outputting the information in the third multimedia type.

Preferably, each of the first input device, the second input device and the third input device includes plural keys, a handwriting input plate, a touch screen, a contact sensor, an image sensor or a microphone, wherein the first input device, the second input device and the third input device are different from each other.

Preferably, each of the first output device, the second output device and the third output device is a speaker, a screen or a vibrator, wherein the first output device, the second output device and the third output device are different from each other.

In accordance with a second aspect of the present invention, there is provided a mobile phone using the information input/output device of the present invention.

In accordance with a third aspect of the present invention, there is provided a personal digital assist using the information input/output device of the present invention.

In accordance with a third aspect of the present invention, there is provided a method for inputting/outputting a multimedia information. The method comprises steps of using a first multimedia device to input an information and recording the information in a first multimedia type; using a second multimedia device to input the information and recording the information in a second multimedia type; using a third multimedia device to input the information and recording the information in a third multimedia type; and outputting at least one of the information in the first multimedia type, the information in the second multimedia type and the information in the third multimedia type.

Preferably, each of the first multimedia type, the second multimedia type and the third multimedia type is a character, a sound, an image, an animation or an action, wherein the first multimedia type, the second multimedia type and the third multimedia type are different from each other.

The above objects and advantages of the present invention will become more readily apparent to those ordinarily skilled in the art after reviewing the following detailed description and accompanying drawings, in which:

### BRIEF DESCRIPTION OF THE DRAWINGS

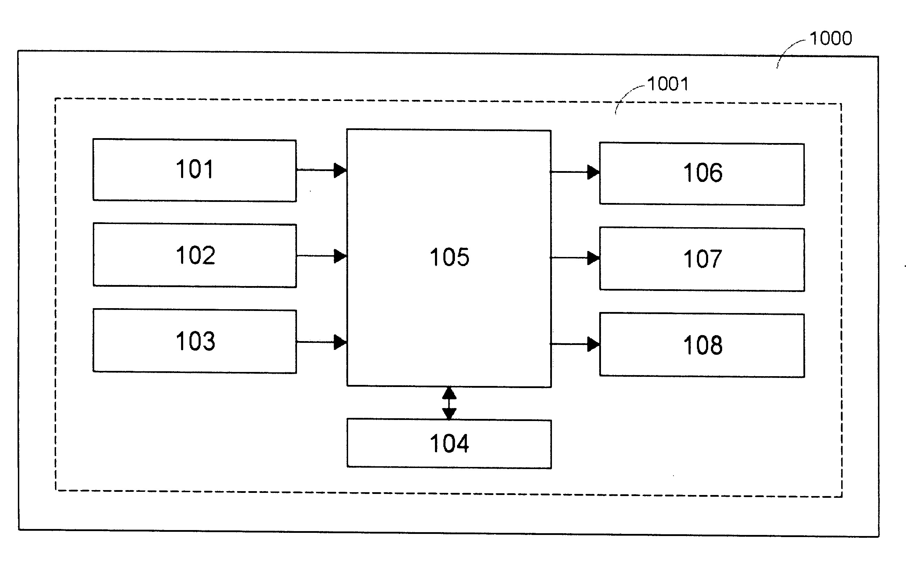

Fig. 1 is a functional block diagram of an information input/output device of a mobile apparatus according to a preferred embodiment of the present invention.

### DETAILED DESCRIPTION OF THE PREFERRED EMBODIMENT

Referring to Fig. 1, a functional block diagram of an information input/output device of a mobile apparatus according to a preferred embodiment of the present invention is shown.

An exemplary mobile apparatus 1000 of Fig. 1 is a mobile phone. The information input/output device 1001 of the mobile apparatus 1000 comprises a first input device 101, a second input device 102, a third input device 103, a recording device 104, a control device 105, a first output device 106, a second output device 107 and a third output device 108.

The information may be presented in various types and includes a phone number, an electronic mail address, a short message, an Internet address, and so on. In the following embodiment, a phone number of a mobile phone is illustrated as an example of the information.

First of all, a selective item, for example "the phone number of Mary" which is shown in a phone book, is the information to be inputted.

The information can be inputted via at least two input devices. In this embodiment, the first input device 101, the second input device 102 and the third input device 103 are employed to input the information.

Each of the first input device 101, the second input device 102 and the third input device 103 includes for example plural keys, a handwriting input plate, a touch screen, a contact sensor, an image sensor or a microphone.

Via the first input device 101, a user can input an information in a first multimedia type. For example, the phone numbers can be inputted via the keys or the handwriting input plates. Alternatively, the user's actions can be sensed via the contact sensors. The names corresponding to the phone numbers are inputted via the microphones. Moreover, the images of the receivers corresponding to the phone numbers may be inputted via the image sensors.

In this embodiment, the first input device 101 includes plural keys for inputting phone numbers therevia.

Via the second input device 102, the user can input an information in a second multimedia type, which is different from the information in the first multimedia type. In this embodiment, the second input device 102 can sense the user's actions such as tapping, touching or shaking actions. For example, the user may successively perform three tapping actions within three seconds. These tapping actions sensed by the sensor will be converted into an electronic signal. The electronic signal relating to these tapping actions is converted into recordable electronic information by the control device 107 and stored in the recording device 104.

Via the third input device 103, the user can input an information in a third multimedia type. The information in the third multimedia type to be inputted via the third input device 103 is different from the information in the first multimedia type and the information in the second multimedia type. In an embodiment, the first input device 101 includes plural keys, the second input device 102 is a contact sensor, and the third input device 103 is a microphone. For example, in a case of recording the phone number of "Mary", the user can input the voice which represent Mary's phone number such as the pronunciation of "Ma-ry" or monosyllabic pronunciation "Du-Du" into the phone via the microphone. The information in the third multimedia type indicating the name Mary is recorded into the recording device 104.

Meanwhile, the information in the first multimedia type, i.e.. the text indicating Mary's phone number, the information in the second multimedia type (i.e. the tapping actions) and the information in the third multimedia type (i.e. the voice information) are recorded into the recording device 104. The information recorded in the recording device 104 according to the following look-up table .

| Type of information | First multimedia information | Second multimedia information | Third multimedia information |
|---|---|---|---|
| Mary's phone number | 12345678 | [1,-1,1] | [1,1] |

The term [1,-1,1] of the information in the second multimedia type used herein indicates the actions of tapping once, intermitting for 1 second and then tapping once. Similarly, the term [1,1] of the information in the third multimedia type used herein indicates the frequency of inputting the voice information.

The information stored in the recording device 104 can be outputted via at least two output devices. In this embodiment, three output devices are employed to output the information. For example, the first output device 106 is a screen for outputting the information in the first multimedia type (i.e. characters of the phone number), the second output device 107 is a vibrator for outputting the information in the second multimedia type (i.e. the tapping actions), and the third output device 108 is a speaker for outputting the information in the third multimedia type (i.e. the voice information).

In other words, according to the above look-up table, the Mary's phone number can be selectively outputted via the screen, the vibrator and the speaker.

Since the same information can be selectively recorded with several means, the information input/output device of the present invention has three benefits. Firstly, the user can properly select a desired output device to output the information according to suitable circumstances. Secondly, it is helpful for assisting the user to memorize the information. Thirdly, the information input/output device of the present invention has a function of identifying the information. These benefits will be described in more details as follows.

The first benefit will be illustrated with reference to the following table so as to realize which sensory organ is available in different circumstances.

| Available sensory organ/Circumstance | Eyes | Ears | Skin contact |
|---|---|---|---|
| Meeting | Yes | No | Yes |
| Driving | No | Yes | Yes |
| Dark place | No | Yes | Yes |

A circumstance mode selective table is provided in the mobile apparatus, which is described as follows.

| Output device/Circumstance mode | Screen | Speak | Vibrator |
|---|---|---|---|
| Meeting | ON | OFF | ON |
| Driving | OFF | ON | ON |
| Dark place | OFF | ON | ON |
| Walking | OFF | ON | ON |

In a case that the user participates in a meeting, the information input/output device of the present invention may enter the "Meeting" mode. When the user answers a call from the caller Mary, the character "Mary" will be displayed on the screen of the mobile phone and the vibrator will vibrate according to the information in the third multimedia type [1,1] stored in the above look-up table. In other words, even though the user participates in a meeting, according to the vibration frequency and the displayed information shown on the screen, the user can realize who the caller is.

In a case that the user is walking, it is not applicable to view the screen with eyes. Meanwhile, the information input/output device of the present invention is operated in the "Walking" mode, and the speaker and the vibrator are employed as the output devices. When the user answers a call from the caller Mary, the vibrator will vibrate the information indicative of the caller Mary, and the speaker will emit a sound indicative of Mary. In other words, without the requirement of viewing the screen of the mobile phone, the user can realize who the caller is.

In a case that the user is in a dark enviroment, it is not possible to view the screen with eyes. If a short message has been previously stored in the mobile phone in an audio form, via the speaker, the user can output the short message via the speaker such that the user will realize the contents of the short message.

In views of the second benefit, the user can use plural output devices to output the same information. Based on the relationship between several types of the same information, it is helpful for assisting the user to memorize the information. For example, if the user forgets how to execute the tapping actions indicative of Mary's phone number, three types of multimedia information, i.e. characters, tapping actions and voice can be repeatedly outputted via the three output devices. Accordingly, the user may readily memorize /recall the characters, tapping actions and sounds indicative of Mary's phone number via different sensory organs.

In views of the third benefit, if the information in the first multimedia type is inputted, the mobile apparatus may output corresponding information in the second multimedia type such that the user can confirm whether the inputted information is valid.

For example, if Mary's phone number is inputted via one input device by means of tapping actions, the voice indicative of Mary's phone number, which has been previously inputted in the mobile phone, can be outputted in order to confirm whether the inputted information is valid.

From the above description, the information input/output device of the present invention is capable of inputting and outputting the same information in at least two multimedia types. Since the user can properly select a desired output device to output the information according to suitable circumstances, the flexible of using the mobile apparatus is largely increased.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A mobile apparatus comprising an information input/output device, characteristic in that the information input/output device comprising:
a first input device for receiving an information in a first multimedia type from a user;
a second input device for receiving said information in a second multimedia type;
a recording device for storing therein said information in said first multimedia type and said information in said second multimedia type;
a first output device for outputting said information in said first multimedia type;
a second output device for outputting said information in said second multimedia type; and
a control device for controlling said first input device, said second input device, said recording device, said first output device and said second output device.

2. The mobile apparatus according to claim 1 further wherein the information input/output device further comprising:
a third input device for receiving said information in a third multimedia type; and
a third output device for outputting said information in said third multimedia type.

3. The mobile apparatus according to claim 2 wherein each of said first input device, said second input device and said third input device includes plural keys, a handwriting input plate, a touch screen, a contact sensor, an image sensor or a microphone, wherein said first input device, said second input device and said third input device are different from each other.

4. The mobile apparatus according to claim 2 wherein each of said first output device, said second output device and said third output device is a speaker, a screen or a vibrator, wherein said first output device, said second output device and said third output device are different from each other.

5. The mobile apparatus according to claim 1, wherein the mobile apparatus is a mobile phone.

6. The mobile apparatus according to claim 1, wherein the mobile apparatus is a person assistant device(PDA).

7. A method for inputting/outputting a multimedia information, comprising steps of:
using a first multimedia device to input an information and recording said information in a first multimedia type;
using a second multimedia device to input said information and recording said information in a second multimedia type;
using a third multimedia device to input said information and recording said information in a third multimedia type; and
outputting at least one of said information in said first multimedia type, said information in said second multimedia type and said information in said third multimedia type.

8. The method for inputting/outputting a multimedia information according to claim 7 wherein each of said first multimedia type, said second multimedia type and said third multimedia type is a character, a sound, an image, an animation or an action, wherein said first multimedia type, said second multimedia type and said third multimedia type are different from each other.
